# EUROPÄISCHE PATENTSCHRIFT

(11) **EP 0 794 312 B1**
(45) Veröffentlichungstag und Bekanntmachung des Hinweises auf die Patenterteilung: **05.12.2001**
(21) Anmeldenummer: 97102190.2
(22) Anmeldetag: 12.02.1997
(51) Int. Cl.: E06B 3/82, E04C 2/08

(54) **Stahlmöbeltür und Eckverbindung**
Steel cabinet door and corner assembly
Porte en acier pour meubles et assemblage d'angle

(30) Priorität: 04.03.1996 DE 29603994 U; 27.04.1996 DE 29607690 U; 27.09.1996 DE 29616671 U
(43) Veröffentlichungstag der Anmeldung: 10.09.1997
(73) Patentinhaber: Christmann & Pfeifer GmbH & Co. KG, 35233 Breidenbach (DE)
(72) Erfinder: Brand, Matthias, 99867 Gotha (DE); Kaufmann, Rolf, 35239 Steffenberg (DE); Muhlberg, Klaus, 35731 Eschenburg (DE); Graser, Karl Heinz, 99880 Leina (DE); Mangels, Oliver, 99869 Boilstädt (DE); Zimmer, Helmut, 99334 Kirchhain (DE)
(74) Vertreter: Olbricht, Karl Heinrich, Dipl.-Phys.

(56) Entgegenhaltungen:
- EP-A- 0 081 249
- EP-A- 0 516 961
- AT-B- 380 921
- DE-A- 2 132 799
- DE-A- 2 422 680
- DE-A- 2 815 389
- DE-A- 2 934 054
- DE-U- 29 511 475
- FR-A- 1 195 118
- FR-A- 1 203 278
- FR-A- 2 109 017
- FR-A- 2 713 693
- US-A- 2 162 333

## Beschreibung

Die Erfindung betrifft eine Stahlmöbeltür und eine Eckverbindung gemäß den Oberbegriffen von Anspruch 1 und Anspruch 11.

Für viele Verwendungen haben sich Stahlblechkonstruktionen eingebürgert, weil sie verhältnismäßig einfach zu fertigen; zu transportieren und aufzustellen sind. In Büro- und Werkstatteinrichtungen haben sich derartige Möbelkonstruktionen dank ihrer Robustheit und Zweckmäßigkeit bewährt.

Zur Körperschalldämmung in Stahlmöbeltüren wird gewöhnlich Wabenpappe zwischen zwei Türschalen geklebt. Weil Pappe aufgrund ihrer hygroskopischen Eigenschaft leicht feucht wird, kann es zur Bildung von Keimherden kommen. Bekannt ist es zwar, die Wabenpappe mit Phenolharz oder mit einer Antischimmelimprägnierung zu beschichten. Dies ist allerdings sehr aufwendig und führt zu keiner vollständigen Behebung des Problems. Ein weiterer Nachteil besteht darin, daß die beschichtete Pappe als Verbundwerkstoff nur noch als Sondermüll entsorgt werden kann.

Ähnliche Probleme ergeben sich mit einem in AT-B-380 921 offenbarten Türblatt. Dieses besteht aus zwei Blechschalen mit dazwischen eingeklebter flacher Dämmeinlage, wobei die beiden Türschalen mit Rastmitteln zur lösbaren Befestigung aneinander derart versehen sind, daß eine erste Türschale unter lagerichtiger Fixierung der Dämmeinlage in die zweite Türschale einrastbar ist Die Dämmeinlage besteht jedoch nicht aus Wellpappe, was die Recyclingfähigkeit beeinträchtigt. Sie ist zudem nicht gegen eindringende Feuchtigkeit geschützt, so daß es auch hier zur Schimmel- bzw. Keimbildung kommen kann.

Unabhängig davon ist das Fügen der Tür oft problematisch, da die Ansichtsflächen beim Fügen nicht beeinträchtigt bzw. beschädigt werden dürfen und die Blechteile gegebenenfalls wieder getrennt werden müssen. Vielfach erfolgt das Fügen durch Schweißen, was jedoch zu Einbrand und optisch sichtbaren Schweißnähten führt. Probleme stellen sich vor allem bei den Ecken, da die Blechbearbeitung nach herkömmlicher Art sehr hohen Aufwand bedingt; zudem lassen sich meist nur schlichte 90°-Kantungen ausführen. Werkzeuge etwa zum Eckenrollen und spezielle Tiefziehpressen erfordern außerordentlich hohe Investitionen. Die Folge ist, daß die Eckengestaltung nicht selten vernachlässigt wird.

EP-A1-0 081 249 beschreibt ein kastenförmiges Möbel-Element, insbesondere ein Türblatt, eine Tischplatte o.dgl., mit einer Bodenplatte aus relativ dünnem Blech sowie daran angeformten Seitenflächen. Letztere sind an ihren einander zugewandten Stirnkanten verkürzt ausgebildet, so daß in den Eckbereichen des Elements Ausnehmungen entstehen, in die jeweils von innen ein Eckteil formschlüssig einsetzbar ist. Das Eckteil liegt mit zwei längsseitig ausgebildeten Flügelansätzen sowie mit endseitig vorgesehenen Wandteilen flach an den Seitenflächen bzw. der Bodenplatte an und wird mit diesen verklebt, was die weitere Montage der Tür verzögert. Erst durch Ausschäumen des kastenförmigen Elements mit einem isolierenden Schaum wird das Eckelement vollständig in seiner Position verankert. Dies ist jedoch nicht nur aufwendig und teuer in der Herstellung. Der Schaum erschwert zudem die Wiederverwertung der Tür, die als Verbundbauteil aufwendig entsorgt werden muß.

Eine andere Möglichkeit wäre es, die Türteile zu kleben. Durch diese Technologie kann aber mit vertretbarem Aufwand keine zuverlässige Verbindung erreicht werden, da in wichtigen Einsatzbereichen klimatische Einflüsse (Temperatur, Feuchtigkeit) die Dauerhaftigkeit gefährden.

Ein wichtiges Ziel der Erfindung ist es, eine vollständig recyclingfähige Stahlmöbeltür mit einer Dämmeinlage zu entwickeln, die keinerlei Feuchtigkeit aufnehmen kann, wobei der Fertigungsaufwand gegenüber der herkömmlichen Technik herabgesetzt werden soll. Beim Recyceln soll die Tür zusammen mit der Dämmeinlage aufarbeitbar sein, ohne daß giftige oder umweltschädliche Abfallprodukte entstehen.

Ein weiteres Ziel der Erfindung besteht darin, mit möglichst wirtschaftlichen Mitteln und geringen Investitionen eine neuartige Verbindung von Tür-Blechteilen ohne großen Investitionsaufwand herzustellen, die sich bequem, prozeßsicher und schnell fügen läßt. Ferner soll eine neuartige Eckverbindung geschaffen werden, die sich mühelos und genau montieren läßt, ohne die Recyclingfähigkeit der gesamten Tür einzuschränken.. Durch Möglichkeiten unterschiedlicher Gestaltung wird eine leichte Anpassung an diverse Zwecke und räumliche Gegebenheiten angestrebt.

Hauptmerkmale der Erfindung sind in Anspruch 1 und Anspruch 11 angegeben. Ausgestaltungen sind Gegenstand der Ansprüche 2 bis 10 und 12 bis 20.

Bei einer Stahlmöbeltür bestehend aus zwei Blechschalen mit dazwischen eingeklebter flacher Dämmeinlage, wobei die beiden Türschalen mit Rastmitteln zur lösbaren Befestigung aneinander derart versehen sind, daß eine erste Türschale unter lagerichtiger Fixierung der Dämmeinlage in die zweite Türschale einrastbar ist, sieht die Erfindung gemäß Anspruch 1 vor, daß die Dämmeinlage eine Papp-Wabenstruktur aufweist und rundum mit einer wasserdichten, ein- oder beidseitig selbstklebend beschichteten Folie aus Aluminium umkleidet ist, die an beiden Hauptflächen der Dämmeinlage satt anliegt.

Ohne Vergrößerung der Abmessungen erhält man eine kompakte wasserresistente Auskleidung der Tür, die äußerst rationell und kostengünstig herstellbar ist. Die Dämmeinlage ist in nur wenigen Arbeitsschritten vollständig beklebt und kann unmittelbar zwischen den Türhälften befestigt werden. Weitere Befestigungsmittel werden nicht benötigt; der Fertigungsaufwand ist also äußerst gering. Sie ist zudem vollkommen wasserdicht eingeschlossen und gegen Eindringen von Feuchtigkeit geschützt, so daß die Türen selbst in Feuchträumen problemlos eingesetzt werden können; eine Keimbildung ist weitestgehend ausgeschlossen.

Darüber hinaus ist die fertige Stahlmöbeltür ökologisch unbedenklich und vollständig recyclebar. Sie kann samt der Dämmeinlage eingeschmolzen werden, wobei die Wabenpappe verbrennt und das Aluminium der Folie mit dem Stahlblech legiert. Das Aluminium unterstützt als starkes Deoxidations- und Denitrierungsmittel die Feinkornbildung und erhöht die Zunderbeständigkeit der gebildeten Stahllegierung, die sich durch Nitride hoher Härte auszeichnet. Giftige oder umweltschädliche Abfallprodukte entstehen nicht.

Gemäß Anspruch 2 ist die Dämmeinlage von der Folie vollflächig überlappend eingehüllt, welche an einander gegenüberliegenden Seiten, insbesondere an den Schmalseiten der Dämmeinlage, jeweils einen Abdichtfalz aufweist. Dieser sorgt für einen dichten Abschluß der Folie und kann kostengünstig hergestellt werden. Die fertig montierte Tür kann daher mitsamt der Pappe vollständig in einer Tauchanlage dekapiert und anschließend lackiert werden, ohne daß die Einlage beschädigt wird. Aufwendige Beschichtungs- und Imprägnierungsvorgänge sind nicht erforderlich; die Handhabung in der Produktion ist erheblich vereinfacht.

Zweckmäßig ist zumindest ein Abdichtfalz nach Anspruch 3 an oder in einer Türschale verankerbar, namentlich an vorgeprägten oder gestanzten Blechvorsprüngen, Laschen o. dgl., so daß die Dämmeinlage im Türinneren exakt gehalten ist.

Nach Anspruch 4 ist vorgesehen, daß die Dämmeinlage vor dem Verrasten der Türschalen an der Innenfläche einer Türschale satt anliegend verklebt ist. Man erzielt so eine erhebliche Verbesserung des Körperschall-Dämmwertes. Dank ausreichender Festigkeit der umhüllten Dämmeinlage werden für die Verbindung keinerlei weitere Befestigungsmittel benötigt; entsprechend gering ist der Fertigungsaufwand. Es ergibt sich eine stabile Verbindung zwischen den Blechteilen, die daher relativ große Belastungen aufnehmen kann.

Konstruktiv günstig ist die Ausgestaltung von Anspruch 5, wonach eine der Türschalen zumindest an zwei einander gegenüberliegenden Rändern jeweils einen einwärts gerichteten Kanten-Umschlag hat und die andere Türschale an zwei einander korrespondierend gegenüberliegenden Rändern an jedem Umschlag verrastbare, zumindest mit einem Teil auswärts gerichtete Abkantungen aufweist. Diese Formgebung läßt sich fertigungstechnisch auf ebenso einfache wie wirtschaftliche Weise herstellen. Die schnelle Montage wird noch unterstützt, wenn der Umschlag laut Anspruch 6 einen zur Innenfläche der einen Türschale gerichteten Anschlag aufweist, beispielsweise eine freie Auslaufkante, einen Roll- oder Bördelfalz u. dgl.

Die Abkantungen der anderen Türschale können nach Anspruch 7 an einem Rand als Stufe und am gegenüberliegenden Rand als Rastfeder ausgebildet sein, wobei die Stufe entlang des einen Innenschalen-Randes im wesentlichen über seine ganze Länge verläuft und an dem Anschlag, ihn untergreifend, zumindest kraftschlüssig festlegbar ist. Man hat also nicht nur eine punktuelle Befestigung, sondern eine mit verhältnismäßig großen Flächenanteilen wirksame Verrastung der beiden Türschalen die sich im Bedarfsfalle auf einfache Weise voneinander lösen lassen.

Indem die Stufe gemäß Anspruch 8 dreischenkelig ausgebildet ist und einen von der Fläche der Innenschale im wesentlichen rechtwinkelig abstehenden Anlage-Schenkel, einen von diesem nach außen weisenden Unterhak-Schenkel und einen von letzterem abwärts, bevorzugt recht- oder spitzwinkelig zurückgebogenen End-Schenkel aufweist, erzielt man eine optimale Abstützung an dem zugeordneten Rand-Umschlag der Außenschale.

Zu formschönem Aussehen sowie leichter Fertig-Bearbeitung und bequemer Reinigung trägt es bei, wenn gemäß Anspruch 9 der Anlage-Schenkel und die Rastfeder der Innenschale an die Tiefe und Gestalt des jeweils zugeordneten Außenschalen-Anschlags angepaßt sind, wobei der End-Schenkel der Stufe als Distanzstück wirken kann. Die Außenfläche der verrasteten Innenschale fluchtet dann mit einer Deckfläche des Außenschalen-Umschlags. Dabei können die Blechteile je nach dem gewünschten Design mit unterschiedlicher oder gleichartiger Oberflächengestaltung, z. B. Farbgebung gefügt werden.

Die Rastfeder kann nach Anspruch 10 eine Einführ-Schräge bzw. -Wölbung und/oder eine an dem Anschlag kraftschlüssig festlegbare Wölbung, Rippe, Clipskante o. dgl. aufweisen.

Eine Eckverbindung mit flächigen Blechteilen und mit einem an freien Blechteil-Kanten formschlüssig festlegbaren Eckabschluß, welcher ein in Form und Abmessungen an die zu verbindenden Blechteile angepaßter Körper ist, insbesondere für eine Stahlmöbeltür nach einem der Ansprüche 1 bis 10, zeichnet sich gemäß dem unabhängigen Anspruch 11 dadurch aus, der Eckabschluß an zumindest einem der zu verbindenden Blechteile durch bloßes Eindrücken von Hand verrastbar ist, wobei der Eckabschluß wenigstens zwei nahe seinen Außenbereichen angeordnete Federrasten aufweist, welche beim Einklipsen die freien Kanten zumindest eines Blechteils in der Rastposition unter- oder hintergreifen und am eingeklipsten Eckabschluß von außen nicht erkennbar sind.

Wo bislang Schrauben, Kleber u. dgl, für die Befestigung irgendwelcher Einsätze unentbehrlich waren, kann man nun den Eckabschluß ohne jegliche Hilfsmittel durch kurzen Druck manuell einrasten. Die in den Außenbereichen angeordneten Federrasten sorgen selbsttätig für den erforderlichen Halt. Auf die äußere Gestalt des Eckabschlusses kommt es hierbei primär nicht mehr an, solange nur Form und Abmessungen allgemein denjenigen zu verbindenden Blechteile entsprechen. Das bedeutet, daß der Konstrukteur nun beachtlichen Spielraum für das Design des Stahlblechmöbels hat, wozu die Eckabschlüsse erheblich beitragen können.

Sehr günstig ist es in diesem Zusammenhang, nach Anspruch 12 an einem Eckabschluß von z. B. etwa quadratischer oder rechteckiger Grundform zwei Federrasten diametral zueinander in je einem Eckbereich anzuordnen. Dadurch erhält die Verrastung eine hohe Formfestigkeit, vor allem wenn die Federrasten beiderseits der Eckdiagonale sitzen, welche in die "Spitze" des Eckabschlusses zeigt. Zweckmäßig sind gemäß Anspruch 13 Ausnehmungen an inneren Bereichen des Eckabschlusses vorhanden, in welche die Federrasten bei seinem Einklipsen seitlich ausweichen können.

Wichtig ist die Ausgestaltung von Anspruch 14, wonach jede Federraste eine Gleitfläche, die beim Einklipsen des Eckabschlusses reibungsarm an einer freien Blechteil-Kante vorbeigeht, sowie eine Haltefläche aufweist, welche in der Rastposition an dieser Blechteil-Kante kraftschlüssig, insbesondere reibschlüssig angreift. Ein und dasselbe Bauelement dient also zur Führung beim Einklipsen und zur Verrastung in der Endposition, wobei laut Anspruch 15 vorgesehen sein kann, daß die Gleitfläche mit der Haltefläche einen Winkel einschließt, namentlich einen rechten oder stumpfen Winkel, so daß an dem Übergang zwischen den beiden Flächen unmittelbar auch schon der Rastvorgang einsetzt. Er wird erleichtert, indem die Gleitfläche in bezug auf die Bewegungsrichtung der Federraste schräg oder gewölbt verläuft, wodurch eine Einführhilfe gegeben ist.

Andererseits wird die Verrastung nach Anspruch 16 dadurch unterstützt, daß die Haltefläche Reib- und/oder Formschlußmittel für die freie Blechteil-Kante aufweist, -z. B. eine Riffelung, Rillen oder sonstige Rastflächen. Auch Aufrauhungen können genügen.

Mit besonderem Vorteil können gemäß Anspruch 17 die Gleitflächen zweier Federrasten zueinander in einem Winkel stehen, namentlich rechtwinklig, so daß Quer-Rastkräfte - bevorzugt auseinandergerichtet, daher spreizend - wirken. Man erkennt, daß durch diese sehr einfache Maßnahme die Rastfestigkeit beträchtlich vergrößert wird.

Eine bedeutsame Weiterbildung besteht laut Anspruch 18 darin, daß der Eckabschluß ein Hohlkörper mit flächigen Aussparungen zur Aufnahme von bündig einpaßbaren Enden der Blechteile ist. Infolgedessen gehen diese glattflächig in den bzw. jeden Eckabschluß über, was nicht nur zu gefälligem Aussehen, sondern auch zu optimalem Formschluß beiträgt.

Bei einer Eckverbindung für eine Stahlmöbeltür der vorgenannten Art sieht die Erfindung gemäß Anspruch 19 ferner vor, daß ein Falzrahmen und eine mit Längs-Abkantungen versehene Blechschale zusammen ein Türblatt, ein Paneel o. dgl. bilden, daß der Falzrahmen Eckausklinkungen hat, in die jeweils ein Eckabschluß einklipsbar ist, und daß in diesen wiederum zumindest eine von der Blechschale im wesentlichen senkrecht abstehende Lasche einfügbar ist, die in der Rastposition an oder neben einer Federraste des Eckabschlusses zur Anlage kommt, wodurch man eine überaus einfache Möglichkeit der Blechteil-Festlegung erzielt.

Ist der Eckabschluß laut Anspruch 20 in einer Richtung quer zur Hauptausdehnungsfläche zumindest eines Blechteils einklipsbar, so bewirkt das nicht bloß eine vorteilhafte rasche Montageweise, sondern auch eine gerade in dieser Querrichtung hohe Formstabilität des Verbundkörpers.

Weitere Merkmale, Einzelheiten und Vorteile der Erfindung ergeben sich aus dem Wortlaut der Ansprüche sowie aus der folgenden Erläuterung von Ausführungsbeispielen anhand der Zeichnungen. Darin zeigen:
- Fig. 1: eine auseinandergezogene Schrägansicht der Bestandteile einer Stahlmöbeltür, teilweise im Querschnitt,
- Fig. 2: eine Querschnittansicht der Türbestandteile zu Beginn ihrer Verbindung,
- Fig. 3: eine Querschnittansicht der verbundenen Bestandteile einer Stahlmöbeltür entsprechend Fig. 2,
- Fig. 4a: eine Draufsicht auf eine Dämmeinlage,
- Fig. 4b: eine Seitenansicht der Dämmeinlage von Fig. 4a, teilweise im Querschnitt,

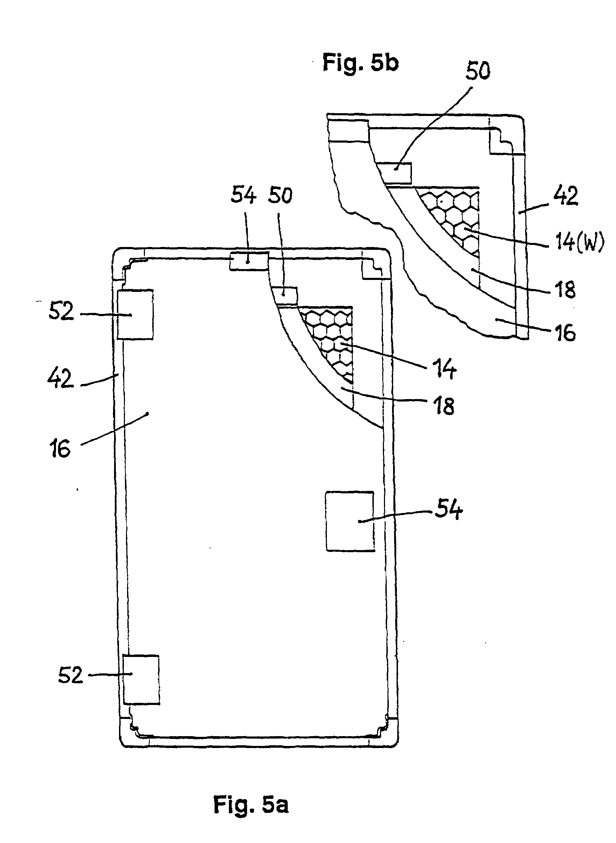

- Fig. 5a: eine Rückansicht einer Stahlmöbeltür, teilweise aufgebrochen,
- Fig. 5b: eine Ausschnittsvergrößerung der Stahlmöbeltür von Fig. 5a,
- Fig. 6: eine auseinandergezogene Schrägansicht zweier zu verbindender Blechteile mit einem Eckabschluß dazwischen,
- Fig. 7: eine vergrößerte Schrägansicht des Eckabschlusses von Fig. 6,
- Fig. 8a: eine Teil-Seitenansicht einer Eckverbindung,
- Fig. 8b: eine Teil-Frontansicht der Eckverbindung von Fig. 8a,
- Fig. 9a und 9b: je eine Teil-Schnittansicht einer Rastverbindung vor bzw. nach dem Einrasten und
- Fig.10a bis 10d: je eine Seitenansicht, Draufsicht, Druntersicht und Hineinsicht einer anderen Bauform eines Eckabschlusses.

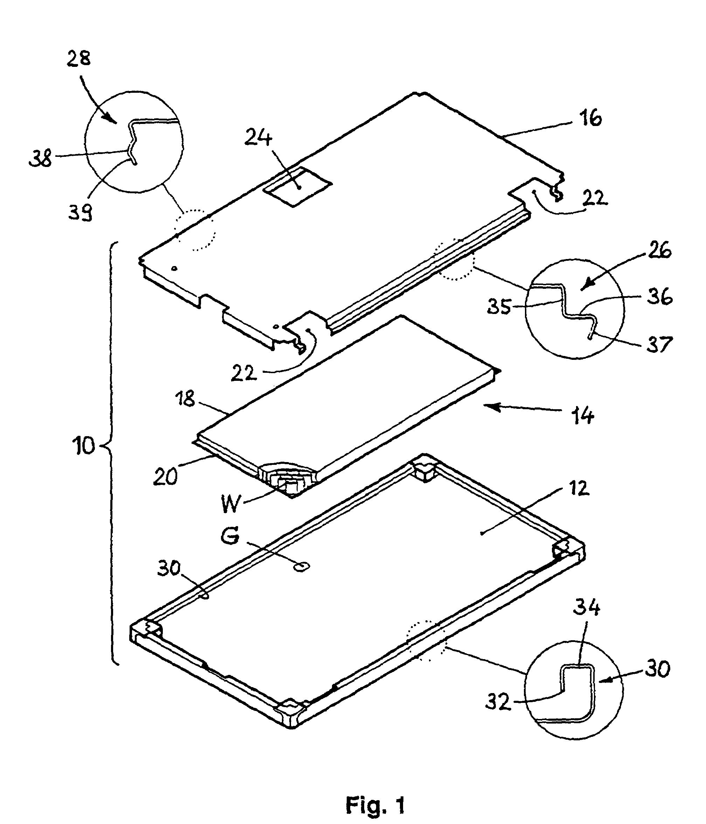

Die in Fig. 1 dargestellte, allgemein mit 10 bezeichnete Stahlmöbeltür hat eine Außenschale 12, eine Dämpfungseinlage 14 und eine Innenschale 16. Letztere weist rückseitig Aufnahmen 22, 24 für (nicht gezeichnete) Scharniere bzw. Schließvorrichtungen auf. Zwischen den beiden Türschalen 12, 16 ist eine Dämmeinlage 14 angeordnet, die - wie an einem aufgebrochenen dargestellten Eck ersichtlich - eine Wabenstruktur W hat und von einer Folie 18 umschlossen ist. Diese hat an den Schmalseiten überstehende Ränder, die zu dichten Falzen 20 überlappend geschlossen sind.

Die Außenschale 12 ist mit einem zur Innenseite hin abgekanteten Umschlag 30 versehen, der einen Anschlag 32 und eine Deckfläche 34 aufweist. Er wirkt mit Bestandteilen der Innenschale 16 zusammen, die entlang einer Längsseite eine Stufe 26 und entlang der gegenüberliegenden Längsseite eine Rastfeder 28 hat.

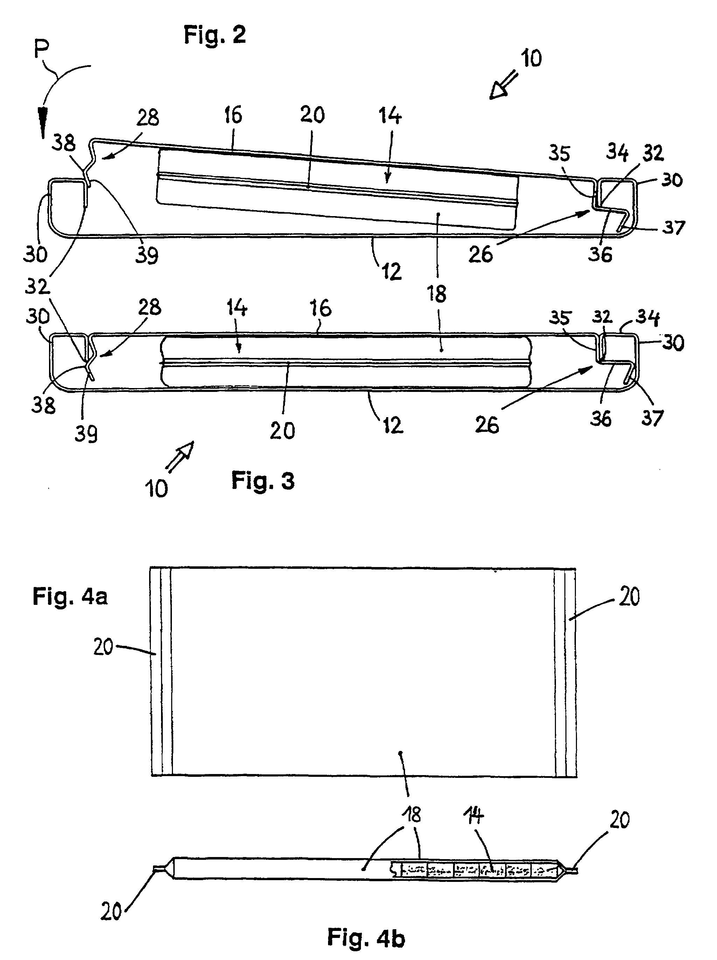

Diese abgekanteten Blechteile sind in Fig. 1 schematisch an den durch Kreise markierten Stellen im vergrößerten Querschnitt gezeigt. Wie man diesen Darstellungen entnimmt, hat die Stufe 26 einen abwärtsgerichteten Anlage-Schenkel 35, einen nach außen gerichteten Unterhak-Schenkel 36 sowie einen einspringend zurückgebogenen End-Schenkel 37, der zugleich einen Abstandhalter gegenüber der Innenfläche der Außenschale 12 bildet (Fig. 2 und 3). Die Rastfeder 28 hat eine Wölbung bzw. Rippe oder Clipskante 38, an die eine Einführ-Schräge oder Wölbung 39 anschließt.

Fig. 2 veranschaulicht, wie eine Innenschale 16 mit der Stufe 26 an dem einen (rechten) Umschlag 30 der Außenschale 12 so angesetzt wird, daß die Rastfeder 28 am inneren Bereich des Umschlags 30 an der gegenüberliegenden Längskante zur Anlage kommt. Die Innenschale 16, an der bereits eine Seite der Dämmeinlage 14 klebt, wird sodann in der durch den Pfeil P in Fig. 2 markierten Richtung zugedrückt, so daß die Clipskante 28 an der Anschlagkante 32 einrastet (Fig. 3). Dabei legt sich zugleich die zuvor noch unverklebte Fläche der Dämmeinlage 14 satt an die Innenseite der Außenschale 12, wodurch auch dort eine vollflächlge Verklebung und zugleich eine Spannkraft zwischen den Schalen 12, 16 erzielt wird.

Die Dämmeinlage 14 besteht vorzugsweise aus einer Wabenpappe W (Fig. 1), die von einer beidseitig mit Klebstoff beschichteten Aluminiumfolie 18 vollflächig eingehüllt ist. Eine Überlappung an den Schmalseiten der Dämmeinlage 14 bildet an beiden Enden bzw. Stirnseiten wasserdichte Abdichtfalze 20 (Fig. 4a, 4b). Vorteilhaft erfolgt der Falzvorgang maschinell gesteuert, wodurch nicht nur geringe Fertigungskosten anfallen, sondern auch höchste Gleichmäßigkeit gesichert ist. Zweckmäßig ist zumindest ein Falz 20 an oder in zumindest einer der Türschalen 12 bzw. 16 verankerbar, namentlich an vorgeprägten oder gestanzten Blechvorsprüngen, Laschen o. dgl., so daß die Dämmeinlage 14 sicher und lagerichtig im Türinneren befestigt wird. Bei der Fertigung der Stahlmöbeltür 10 wird die eingehüllte Dämmeinlage 14 zwischen die Türschalen 12,16 eingebracht, wobei die äußere Klebeschicht der Aluminiumfolie 18 für einen sicheren Halt der Dämmeinlage 14 im Türinneren sorgt.

Durch die nach innen gerichteten Kantungen an den Türschalen 12, 16 läßt sich die Tür 10 problemlos fügen. Die Kantungen bzw. Sicken können in herkömmlicher Technik hergestellt werden. Die Form und Bemessung einerseits des Umschlags 30, andererseits der Stufe 26 sowie der Rastfeder 28 bestimmen die Distanz zwischen den Randteilen der Außenschale 12 und der Innenschale 16. Die Formgestaltung gewährleistet eine ebenso einfache wie zuverlässige Verrastung, welche relativ große Kräfte aufnehmen kann; dennoch läßt sich die Verbindung im Bedarfsfalle trennen. Dazu läßt sich z. B. ein (nicht dargestelltes) Werkzeug an einer Schloßbohrung G (Fig. 1) einführen, die zugleich als Griffloch oder Greifansatz dient.

Zur Montage wird die Innenschale 16 samt eingeklebter Dämmeinlage 14 mit der Stufe 26 unter den Umschlag 30 der Außenschale 12 geschoben, bis der Anlage-Schenkel 35 an dem Anschlag 32 dicht anliegt. Dann rastet man die Innenschale 16 am gegenüberliegenden Umschlag 30 der Außenschale 12 ein, wobei die Clipskante 38 dort den Anschlag 32 untergreift. Zugleich verklebt sich die Dämmeinlage 14 vollflächig mit der Innenfläche der Außenschale 12, so daß die fertig gefügte Tür 10 große Stabilität erlangt und Körperschall gut abdämmt. Nach dem Zusammenfügen der Blechteile 12, 16, wird die komplette Tür 10 in einer Taucheranlage dekapiert und anschließend lackiert, so daß der Fertigungsaufwand erheblich verringert ist und Beschädigungen an der Dämmeinlage 14 vollständig vermieden werden.

Die fertige Stahlmöbeltür 10 ist ökologisch unbedenklich und kann vollständig recyclet werden. Sie wird dazu samt der Dämmeinlage eingeschmolzen, wobei die Wabenpappe W verbrennt und das Aluminium der Folie 18 mit dem Stahlblech legiert. Das Aluminium unterstützt als starkes Desoxidations- und Denitrierungsmittel die Feinkornbildung und erhöht die Zunderbeständigkeit der gebildeten Stahllegierung, die sich durch Nitride hoher Härte auszeichnet. Giftige oder umweltschädliche Abfallprodukte entstehen nicht.

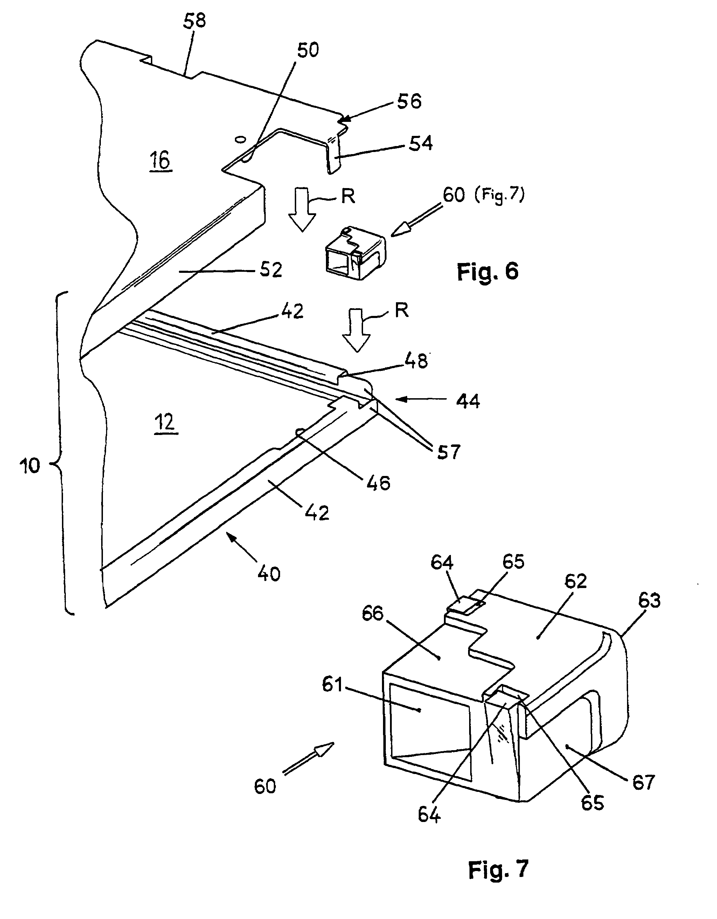

Man erkennt in Fig. 6 einen Eckbereich zweier Blechteile 12, 16, die nach Einfügen eines Eckabschlusses 60 zu einem Türblatt 10 verbunden werden. Ein Falzrahmen 40 begrenzt die Außenschale 12, d, h. die Vorderseite einer Blechschranktür. Ihr zugeordnet ist eine Blechschale bzw. -platte als Innenschale 16 (Türrückseite). Der Falzrahmen 40 hat eine Umkantung 42, deren Eckbereiche jeweils eine Ausklinkung 44 solcher Gestaltung aufweisen, daß von der Umkantung 42 neben freien Kanten 48 Überstände 57 vorhanden sind, welche die Seitenwände zum Eck hin fortsetzen. An einwärtsgerichteten Teilen der Umkantung 42 können Ausschnitte 46 vorhanden sein, z. B. zur Aufnahme eines (nicht gezeichneten) Scharniers.

Die Innenschale 16 ist mit einer umlaufenden Abkantung 52 versehen, die im Bereich eines Ausschnittes 50 bzw. einer Ausstanzung 58 unterbrochen ist. Der Eckbereich läuft in eine Paßecke 56 aus. Daneben befindet sich eine Lasche 54, die parallel zur Abkantung 52 verläuft. Der Eckabschluß 60 kann in Richtung R, d. h. quer zur Hauptausdehnungsfläche des Falzrahmens 40, in dessen Ausklinkung 44 eingedrückt und dadurch verrastet werden. In der gleichen Richtung R läßt sich die Innenschale 16 an dem Falzrahmen 40 samt Eckabschluß 60 rastend verklemmen. Eine zwischen den Blechteilen 12, 16 eingelegte (in Fig. 6 weggelassene) Leichtstoffwabe kann zur Verklebung der Elemente dienen; wie beschrieben bewirkt sie zudem eine beträchtliche Körperschalldämmung.

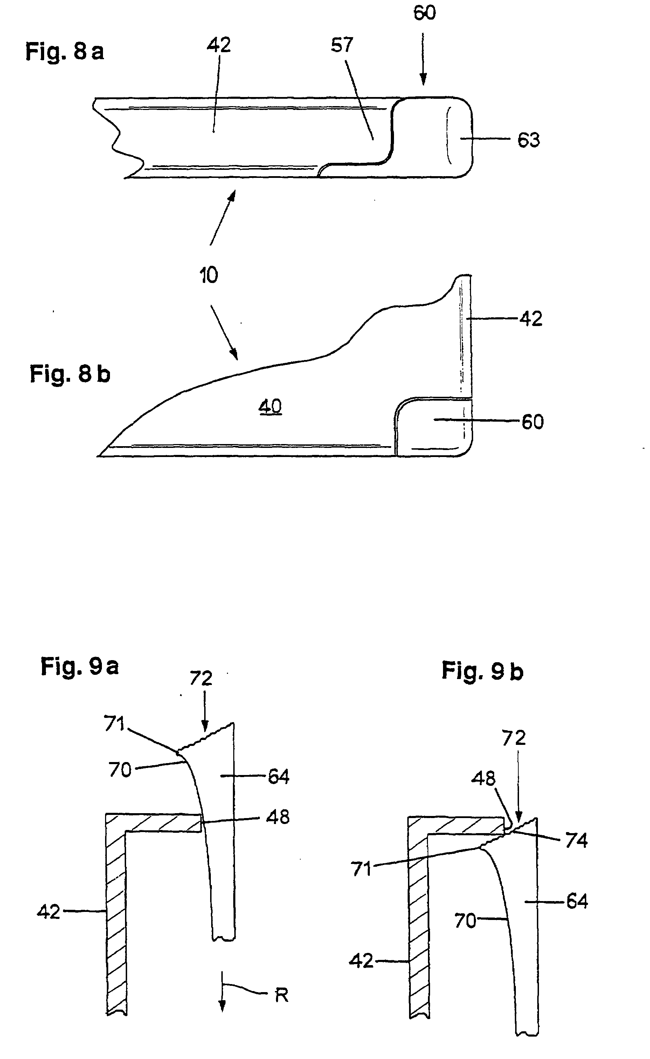

Den Aufbau des Eckabschlusses 60 ersieht man aus Fig. 7. Er hat ein Hohlprofil 61 mit einer Deckfläche 62 und einer Umlaufrundung 63. An der Deckfläche 62 ist eine Paßaussparung 66 vorgesehen, deren Gestalt der Paßecke 56 der Innenschale 16 angepaßt ist. An die Umlaufrundung 63 schließen Seitenaussparungen 67 an, die zur Aufnahme der Überstände 57 der Umkantung 42 dienen. Wesentliche Elemente des Eckabschlusses 60 sind zwei Federrasten 64, die seitlich jeweils in eine Ausnehmung 65 ausweichen können. Die Seitenansicht von Fig. 8a und die Frontansicht von Fig. 8b zeigen den verrasteten Eckabschluß 60 am Falzrahmen 40 und seiner Umkantung 42.

Der Verrastungs-Vorgang ist anhand von Fig. 9a und 9b erkennbar. Wird der Eckabschluß 60 in die Ausklinkung 44 eingesetzt, so gleiten die mit ihm verbundenen Federrasten 64 an den freien Kanten 48 entlang abwärts in Richtung R. Dabei streicht eine Gleitfläche 70 an der freien Kante 48 entlang und drückt dadurch die Federraste 64 einwärts in die (hier nicht gezeichnete) Ausnehmung 65.

Das Einrasten findet statt, sobald eine Nase 71 die freie Kante 48 passiert hat, welche sodann an einer Haltefläche 72 im Winkel zur Anlage kommt. Die Federkraft der Raste 64 preßt die Haltefläche 72 an bzw. unter die freie Kante 48 der Umkantung 42. Die Rastwirkung kann z. B. durch Riefen 74 in der Haltefläche 72 (Fig. 9b) noch unterstützt werden.

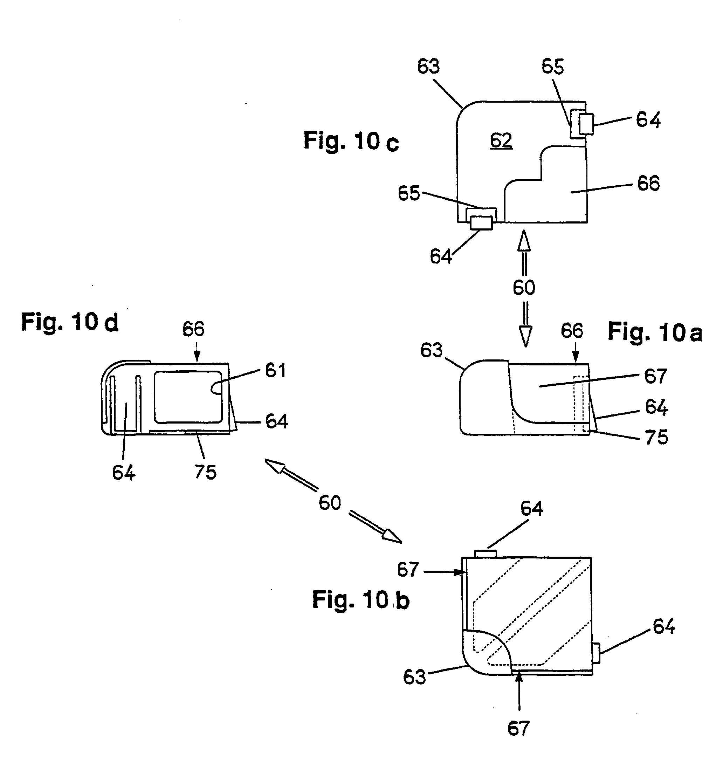

Einzelheiten eines Eckabschlusses 60 gehen aus den Fig. 10a bis 10d hervor, und zwar in gegenüber Fig. 6 umgekehrter Lage. Die dargestellte Umlaufrundung 63 ist ein Beispiel für die Eckform, die jedoch nach Bedarf auch von der Zeichnung abweichend gestaltet sein kann. Dasselbe gilt für die Paßaussparung 66, welche lediglich an die Paßecke 56 der Innenschale 16 angepaßt sein muß, und ebenso für die Seitenaussparungen 67 in bezug auf die Überstände 57 der Umkantung 42. Neben den Federrasten 64 verbleibt eine Randkante 75.

Wesentlich ist, daß der Eckabschluß 60 optisch und funktionell hochwertig gestaltet sein und ohne separate Hilfsmittel in zumindest ein Blechteil eingefügt werden kann. Die Stahlblechkonstruktion kann samt Einsatzteil bzw. Eckabschluß gemeinsam lackiert werden. Die Einheit kann auch anderen konventionellen Beschichtungsverfahren unterzogen werden, beispielsweise der Naßlackierung, Pulverbeschichtung o. dgl. Für den Fall der Entsorgung läßt sich der Eckabschluß ohne nennenswerten Aufwand von den Blechteilen abtrennen.

Die Erfindung ist nicht auf eine der vorbeschriebenen Ausführungsformen beschränkt, sondern in vielfältiger Weise abwandelbar. Man erkennt aber, daß eine Stahlmöbeltür 10 bevorzugt aus einer Außen- und einer Innenschale 12 bzw. 16 mit dazwischen befindlicher flacher Dämmeinlage 14 besteht. Letztere weist insbesondere eine Papp-Wabenstruktur W auf und ist rundum mit einer wasserdichten Folie 18 umkleidet. Diese umhüllt die Dämmeinlage 14 vollflächig überlappend und liegt an deren beiden Hauptflächen (Ober- und Unterseite) satt an. Die selbstklebend beschichtete Aluminiumfolie 18 hat an zwei einander gegenüberliegenden Seiten, insbesondere an den Schmalseiten der Dämmeinlage 14, jeweils einen Abdichtfalz 20 zur lagerichtigen Verankerung an oder in einer Türschale 12 bzw. 16, namentlich an vorgeprägten oder gestanzten Blechvorsprüngen, Laschen o. dgl. Die Innenschale 16 hat auswärts gerichtete Abkantungen 26, 28 an zwei einander gegenüberliegenden Rändern und ist an korrespondierenden Rändern der Außenschale 12 mit je einem Umschlag 30 verrastbar, der einen einwärtsgerichteten Anschlag 32 aufweist. Ein Rand der Innenschale 16 ist als den Anschlag 32 untergreifende Stufe 26, der andere als Rastfeder mit Einführ-Schräge 39 und Clipskante 38 ausgebildet. Ein Anlage-Schenkel 35 der Stufe 26 und die Rastfeder 28 der Innenschale 16 sind an die Tiefe und Gestalt des zugeordneten Anschlags 32 so angepaßt, daß die Außenfläche der verrasteten Innenschale 16 mit einer Deckfläche 34 des Umschlags 30 fluchtet. Ein vorzugsweise gerundeter Eckabschluß 60 ist an freien Blechteil-Kanten 48 formschlüssig festlegbar, in Gestalt sowie Abmessungen an die zu verbindenden, abgekanteten Blechteile 12; 16 angepaßt und an zumindest einen davon durch bloßes Eindrücken von Hand verrastbar. Dazu dienen zwei von außen nicht erkennbare Federrasten 64, welche beim Einklipsen die freien Kanten 48 unter- oder hintergreifen. Die Federrasten 64, können diametral zueinander in je einem Eckbereich neben Ausweich-Ausnehmungen 65 angeordnet sein und je eine schräge oder gewölbte Gleitfläche 70 haben, die an einer Nase 71 in eine z. B. geriffelte Haltefläche 72 übergeht. Zumindest ein Blechteil hat eine abgekantete Lasche 54, die in der Rastposition neben einer Federraste 64 des Eckabschlusses 60 zur Anlage kommt, wenn dieser beispielsweise senkrecht R in eine Eckausklinkung 44 eines Falzrahmens 40 eingeklipst wird. Bevorzugt hat der Eckabschluß 60 flächige Aussparungen 66; 67 zur Aufnahme von bündig einpaßbaren Enden 56; 57 zumindest eines der Blechteile 12, 16.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

### Bezugszeichenliste

- G: Greifansatz/Griffloch
- P: Pfeil
- R: Richtung
- W: Wabenstruktur/-pappe

- 10: Stahlmöbeltür
- 12: Außenschale
- 14: Dämmeinlage
- 16: Innenschale
- 18: Folie
- 20: Abdichtfalz
- 22,24: Aufnahme
- 26: Stufe
- 28: Rastfeder
- 30: Umschlag
- 32: Anschlag
- 34: Deckfläche
- 35: Anlage-Schenkel
- 36: Unterhak-Schenkel
- 37: End-Schenkel
- 38: Wölbung/Rippe/Clipskante
- 39: Einführ-Schräge/-Wölbung
- 40: Falzrahmen
- 42: Umkantung
- 44: Ausklinkung
- 46: Ausschnitt
- 48: freie Kante
- 50: Ausschnitt
- 52: Abkantung
- 54: Lasche
- 56: Paßecke
- 57: Überstand
- 58: Ausstanzung
- 60: Eckabschluß (körper)
- 61: Hohlprofil
- 62: Deckfläche
- 63: Umlaufrundung
- 64: Federraste
- 65: Ausnehmung
- 66: Paßaussparung
- 67: Seitenaussparung
- 70: Gleitfläche
- 71: Nase
- 72: Haltefläche
- 74: Riefen
- 75: Randkante

## Patentansprüche

1. Stahlmöbeltür (10) bestehend aus zwei Blechschalen (12, 16) mit dazwischen eingeklebter flacher Dämmeinlage (14), wobei die beiden Türschalen (12, 16) mit Rastmitteln (26 bis 39) zur lösbaren Befestigung aneinander derart versehen sind, daß eine erste Türschale (z. B. 16) unter lagerichtiger Fixierung der Dämmeinlage (14) in die zweite Türschale (z.B. 12) einrastbar ist, **dadurch gekennzeichnet, daß** die Dämmeinlage (14) eine Papp-Wabenstruktur (W) aufweist und rundum mit einer wasserdichten, ein- oder beidseitig selbstklebend beschichteten Folie (18) aus Aluminium umkleidet ist, die an beiden Hauptflächen der Dämmeinlage (14) satt anliegt.

2. Tür nach Anspruch 1, **dadurch gekennzeichnet, daß** die Dämmeinlage (14) von der Folie (18) vollflächig überlappend eingehüllt ist, welche an zwei einander gegenüberliegenden Seiten, insbesondere an den Schmalseiten der Dämmeinlage (14), jeweils einen Abdichtfalz (20) aufweist.

3. Tür nach Anspruch 2, **dadurch gekennzeichnet, daß** zumindest ein Abdichtfalz (20) an oder in einer Türschale (12 bzw. 16) verankerbar ist, namentlich an vorgeprägten oder gestanzten Blechvorsprüngen, Laschen o. dgl.

4. Tür nach einem der Ansprüche 1 bis 3, **dadurch gekennzeichnet, daß** die Dämmeinlage (14) vor dem Verrasten der Türschalen an der Innenfläche einer Türschale (16) satt anliegend verklebt ist.

5. Tür nach einem der Ansprüche 1 bis 4, **dadurch gekennzeichnet, daß** eine der Türschalen (z.B. 12) zumindest an zwei einander gegenüberliegenden Rändern jeweils einen einwärts gerichteten Kanten-Umschlag (30) hat und-daß die andere Türschale (z.B. 16) an zwei einander korrespondierend gegenüberliegenden Rändern an jedem Umschlag (30) verrastbare, zumindest mit einem - Teil (36; 38) auswärts gerichtete Abkantungen (26; 28) aufweist.

6. Tür nach Anspruch 5, **dadurch gekennzeichnet, daß** der Umschlag (30) einen zur Innenfläche der zweiten Türschale (12) gerichteten Anschlag (32) aufweist, beispielsweise eine freie Auslaufkante, einen Roll- oder Bördelfalz u. dgl.

7. Tür nach Anspruch 5 oder 6, **dadurch gekennzeichnet, daß** die Abkantungen der ersten Türschale (16) an einem Rand als Rastfeder (28) und an einem gegenüberliegenden Rand als Stufe (26) ausgebildet sind, welche entlang des einen Innenschalen-Randes im wesentlichen über seine ganze Länge verläuft und an dem Anschlag (32), ihn untergreifend, zumindest kraftschlüssig festlegbar ist.

8. Tür nach Anspruch 7, **dadurch gekennzeichnet, daß** die Stufe (26) dreischenkelig ausgebildet ist und einen von der Fläche der ersten Türschale (16) im wesentlichen rechtwinkelig abstehenden Anlage-Schenkel (35), einen von diesem nach außen weisenden Unterhak-Schenkel (36) und einen von letzterem abwärts, bevorzugt recht- oder spitzwinkelig zurückgebogenen End-Schenkel (37) aufweist.

9. Tür nach Anspruch 8, **dadurch gekennzeichnet, daß** der Anlage-Schenkel (35) und die Rastfeder (28) der ersten Türschale (16) an den jeweils zugeordneten Außenschalen-Anschlag (32) so angepaßt sind, daß die Außenfläche der verrasteten ersten Türschale (16) mit einer Deckfläche (34) des Kanten-Umschlags (30) der zweiten Türschale (12) fluchtet.

10. Tür nach einem der Ansprüche 7 bis 9, **dadurch gekennzeichnet, daß** die Rastfeder (28) eine Einführ-Schräge bzw. -Wölbung (39) und/oder eine an dem Anschlag (32) kraftschlüssig festlegbare Wölbung, Rippe, Clipskante (38) o. dgl. aufweist.

11. Eckverbindung mit flächigen Blechteilen (12; 16) und mit einem an freien Blechteil-Kanten (48) formschlüssig festlegbaren Eckabschluß (60), welcher ein in Form und Abmessungen an die zu verbindenden Blechteile (12; 16) angepaßter Körper ist, insbesondere für eine Stahlmöbeltür nach einem der Ansprüche 1 bis 10, **dadurch gekennzeichnet, daß** der Eckabschluß (60) an zumindest einem der zu verbindenden Blechteile (12; 16) durch bloßes Eindrücken von Hand verrastbar ist, wobei der Eckabschluß (60) wenigstens zwei nahe seinen Außenbereichen angeordnete Federrasten (64) aufweist, welche beim Einklipsen die freien Kanten (48) zumindest eines Blechteils (12) in der Rastposition unter- oder hintergreifen und am eingeklipsten Eckabschluß (60) von außen nicht erkennbar sind.

12. Eckverbindung nach Anspruch 11, **dadurch gekennzeichnet, daß** an einem Eckabschluß (60) von im wesentlichen quadratischer oder rechteckiger Grundform zwei Federrasten (64) etwa diametral zueinander in je einem Eckbereich des Eckabschlusses (60) angeordnet sind.

13. Eckverbindung nach Anspruch 11 oder 12, **dadurch gekennzeichnet, daß** als Ausweichraum für seitliche Bewegungen der Federrasten (64) an diesen benachbarten inneren Bereichen des Eckabschlusses (60) Ausnehmungen (65) vorhanden sind.

14. Eckverbindung nach einem der Ansprüche 11 bis 13, **dadurch gekennzeichnet, daß** jede Federraste (64) eine Gleitfläche (70), die beim Einklipsen des Eckabschlusses (60) reibungsarm an einer freien Blechteil-Kante (48) vorbeigeht, und eine Haltefläche (72) aufweist, welche in der Rastposition kraftschlüssig, insbesondere reibschlüssig an dieser Blechteil-Kante (48) angreift.

15. Eckverbindung nach Anspruch 14, **dadurch gekennzeichnet, daß** die Gleitfläche (70) mit der Haltefläche (72) einen Winkel einschließt und/oder daß die Gleitfläche (70) in bezug auf die Bewegungsrichtung der Federraste (64) schräg oder gewölbt verläuft.

16. Eckverbindung nach Anspruch 14 oder 15, **dadurch gekennzeichnet, daß** die Haltefläche (72) Reib- und/oder Formschlußmittel für die freie Blechteil-Kante (48) aufweist, z. B. eine Riffelung, Rillen o. dgl.

17. Eckverbindung nach einem der Ansprüche 14 bis 16, **dadurch gekennzeichnet, daß** die Gleitflächen (70) zweier Federrasten (64) zueinander in einem Winkel stehen, namentlich rechtwinkelig.

18. Eckverbindung nach einem der Ansprüche 11 bis 17, **dadurch gekennzeichnet, daß** der Eckabschluß (60) ein Hohlprofil (61) mit flächigen Aussparungen (66; 67) zur Aufnahme von bündig einpaßbaren Enden (56; 57) zumindest eines Blechteils (12; 16) hat.

19. Eckverbindung für eine Stahlmöbeltür nach einem der Ansprüche 11 bis 18, **dadurch gekennzeichnet, daß** ein Umkantungen (42) aufweisender Falzrahmen (40) und eine mit Längs-Abkantungen (52) versehene Blechschale oder -platte (16) zusammen ein Türblatt (T), ein Paneel o. dgl. bilden, daß der Falzraum (40) Eckausklinkungen (44) hat, in welche jeweils ein Eckabschluß (60) einklipsbar ist, und daß in diesen eine von der Hauptausdehnungsfläche der Blechschale (16) im wesentlichen senkrecht abstehende Lasche (54) einfügbar ist, die in der Rastposition an oder neben einer Federraste (64) des Eckabschlusses (60) zur Anlage kommt.

20. Eckverbindung nach Anspruch 19, **dadurch gekennzeichnet, daß** der Eckabschluß (60) in einer Richtung (R) quer zur Hauptausdehnungsfläche zumindest eines Blechteils (z. B. 12) einklipsbar ist.

## Claims

1. Steel cabinet door (10) composed of two sheet metal trays (12, 16), with an insulating flat insert (14) cemented in between them, both door trays (12, 16) being equipped with snap means (26 to 39) for mutually detachable fixing in such a way that a first door tray (e.g. 16) is snap-locked in a second door tray (12) so as to conserve the accurate fixing position of the insulating insert (14), **wherein** the insulating insert (14) has a paperboard honeycomb structure (W) and is covered all around with a watertight aluminium foil (18) coated in a one-sided or double-sided self-adhesive way and is snugly fitting both main surfaces of the insulating insert (14).

2. Door according to claim 1, **wherein** the insulating insert (14) is wrapped throughout by the foil (18) in an overlapping manner, the foil (18) including an insulating fold (20) on two opposing sides, in particular on the narrow sides of the insulating insert (14).

3. Door according to claim 2, **wherein** at least one insulating fold (20) is adapted to be secured at or in a door tray (12 or 16), especially on punched or pre-stamped sheet metal protrusions, straps or the like.

4. Door according to any one of claims 1 to 3, **wherein** prior to door tray snapping, the insulating insert (14) is cemented to the inner surface of one door tray (16) in snug fit.

5. Door according to any one of claims 1 to 4, **wherein** one door tray (e.g. 12) is provided with inwardly directed edged crimpings (30) at least located at two rims positioned on opposing sides, the other door tray (e.g. 16) having edges (26; 28), at least one part (36; 38) of which is oriented outwards and which are disposed on two oppositely oriented rims for locking with each crimping (30).

6. Door according to claim 5, **wherein** the crimping (30) comprises a stop (32) directed to the inner surface of the second door tray (12), e.g. a free lead-out edge, a rolled or flanged fold, etc.

7. Door according to claim 5 or claim 6, **wherein** the edges of the first door tray (16) form a snap spring (28) at one rim and form a step (26) at an opposite rim, which step extends over substantially all the length of the first inner tray rim and is adapted to at least non-positively engage the stop (32) from below.

8. Door according to claim 7, **wherein** the step (26) is composed of three legs, with a set-leg (35) sticking out substantially perpendicular to the surface of the first door tray (16), with a hook-leg (36) connected to and pointing out away from the set-leg (35) and with a terminal leg (37) bent back from the hook-leg (36) in a downward orientation, preferably at a right or an acute angle.

9. Door according to claim 8, **wherein** the set-leg (35) and the snap spring (28) of the first door tray (16) are adapted to the associated outside tray stop (32) in such a way that the outside surface of the locked first door tray (16) is aligned with a top surface (34) of the edged crimping (30) of the second door tray (12).

10. Door according to any one of claims 7 to 9, **wherein** the snap spring (28) is provided with an introducing bevel or bulge (39) and/or with a curve portion, a rib, a clip edge (38) or the like for non-positive engagement at the stop (32).

11. Corner assembly including flat sheet metal parts (12; 16) and a corner termination (60) to be positively fixed to free sheet metal edges (48), being a body adapted by form and dimensions to the sheet metal parts (12; 16) to be connected, in particular for a steel cabinet door according to any one of claims 1 to 10, **wherein** the corner termination (60) is lockable to at least one of the sheet metal parts (12; 16) by simple manual pushing, the corner termination (60) comprising at least two spring locks (64) which are located close to its external parts, which when snapped into locking position reach under or behind free edges (48) of at least one sheet metal part (12) and which are imperceptible from outside at the snapped corner termination (60).

12. Corner assembly according to claim 11, **wherein** two spring locks (64) are arranged in about diametrical opposition in one corner section each of the corner termination (60) which latter is of substantially square or rectangular basic shape.

13. Corner assembly according to claim 11 or claim 12, **wherein** inner zones of the corner termination (60) adjacent the spring locks (64) include recesses (65) as evasive spaces for lateral movements of the spring locks (64).

14. Corner assembly according to any one of claims 11 to 13, **wherein** each spring lock (64) comprises a sliding surface (70) that passes freely by a bare sheet metal part edge (48) as the corner terminaton (60) is snapped, and further comprises a holding surface (72) that in its snap position engages this sheet metal part edge (48) in a non-positive manner, in particular under friction fit.

15. Corner assembly according to claim 14, **wherein** the sliding surface (70) is at an angle to the holding surface (72) and/or wherein the sliding surface (70) is inclined or bulged relative to moving direction of the spring lock (64).

16. Corner assembly according to claim 14 or claim 15, **wherein** the holding surface (72) includes means for friction fit and/or positive fit at the free sheet metal part edge (48), e.g. corrugations, grooves or the like.

17. Corner assembly according to any one of claims 14 to 16, **wherein** the sliding surfaces (70) of two spring locks (64) are at an angle to each other, especially a right angle.

18. Corner assembly according to any one of claims 11 to 17, **wherein** the comer termination (60) includes a hollow section (61) with two-dimensional recesses (66; 67) for receiving flush-fitting ends (56; 57) of at least one sheet metal part (12; 16).

19. Corner assembly for a steel cabinet door according to any one of claims 11 to 18, **wherein** a sash-type frame (40) having fold edges (42) and a sheet metal tray or sheet metal plate (16) having longitudinal edges (52) together form a door leaf (T), a panel or the like, wherein the sash fold space (40) includes comer notches (44) for snapping in one corner termination (60) each and wherein a bracket (54) sticking out substantially perpendicular to the main surface extension of the sheet metal tray (16) is insertable in said corner termination (60), which bracket (54) is in the locked position engaged by a spring lock (64) of the corner termination (60).

20. Corner assembly according to claim 19, **wherein** the corner termination (60) is adapted to be snap-locked in a transverse direction (R) to the main surface extension of at least one sheet metal part (e.g. 12).

## Revendications

1. Porte en acier pour meubles (10) composée de deux coques en tôle (12, 16), avec une couche isolante (14) entre-collée (12, 16), les deux coques de porte (12, 16) étant munies d'une telle façon de moyens d'encliquetage (26 à 39), destinés à être fixés entre eux d'une manière amovible qu'une première coque de porte (p.ex. 16) est enclenchée dans la deuxième coque de porte (p.ex. 12) en maintenant la propre position de fixation de la couche isolante (14), **caractérisée en ce que** la couche isolante (14) a une structure cartonnée en nid d'abailles (W) et qu'elle est entièrement revêtue d'une feuille en aluminium (18) étanche à l'eau, enduite d'un film autocollant sur un ou chaque de ses côtés et jointe à plat point aux deux surfaces principales de la couche isolante (14).

2. Porte selon la revendication 1, **caractérisée en ce que** la couche isolante (14) est enrobée d'une manière recouvrante sur toute sa surface par la feuille (18) et que cette feuille (18) présente un pli d'étanchéification (20) sur chaque de deux côtés opposés de la couche isolante (14), notamment sur ses côtés etroits.

3. Porte selon la revendication 2, **caractérisée en ce qu'**au moins un pli d'étanchéification (20) est apte à être ancré avec ou dans une coque de porte (12 ou 16), notamment au niveau des parties de tôle en saillie prédécoupées ou préestompées, des colliers de fixation ou semblables.

4. Porte selon l'une des revendications 1 à 3, **caractérisée en ce qu'**avant l'enclenchement des coques de porte, la couche isolante (14) est collée sur la surface intérieure d'une coque de porte (16) d'une manière affleurée.

5. Porte selon l'une des revendications 1 à 4, **caractérisée en ce qu'**une des coques de porte (p.ex. 12) a un rabattement de bord (30) orienté vers l'intérieur et respectivement agencé sur au moins deux bords arrangés en opposé l'un par rapport à l'autre, et que l'autre coque de porte (p.ex. 16) présente des arêtes (26; 28) orientées avec au moins une partie (36; 38) vers l'extérieur, puis situées sur deux bords arrangés en correspondance opposée et étant susceptibles d'être enclenchées dans chaque rabattement (30).

6. Porte selon la revendication 5, **caractérisée en ce que** le rabattement (30) possède un arrêt (32) dirigé vers le côté intérieur de la deuxième coque de porte (12), p.ex. une arête de sortie libre, un pli enroulé, un pli à bord bridé et semblables.

7. Porte selon l'une des revendications 5 ou 6, **caractérisée en ce que** les arêtes de la première coque de porte (16) sont conçues en forme de ressort à cran d'arrêt (28) sur un bord et sur le bord opposé en forme d'une marche (26) qui longe l'un des bords de la coque intérieure sur principalement toute sa longueur et qui est apte à être attachée à l'arrêt (32) en l'enveloppant, au moins d'une manière entraînée par adhérence.

8. Porte selon la revendication 7, **caractérisée en ce que** la marche (26) est composée de trois branches comprenant une branche adjacente (35) qui est essentiellement orientée d'une manière perpendiculaire par rapport à la surface de la première coque de porte (16), comprenant une branche d'accrochage (36), liée à la branche adjacente (35) et donnant vers l'extérieur, et comprenant une branche terminale (37) qui part de la branche d'accrochage (36) et qui est pliée vers le bas préférentiellement d'une manière rectangulaire ou acutangulaire.

9. Porte selon la revendication 8, **caractérisée en ce que** la branche adjacente (35) et le ressort à cran d'arrêt (28) de la première coque de porte (16) sont adaptés à l'arrêt (32) de la coque extérieure respectivement associé, de telle façon que la surface extérieure de la première coque enclenchée (16) s'aligne avec une surface couvrante (34) du rabattement de bord (30) de la deuxième coque de porte (12).

10. Porte selon l'une des revendications 7 à 9, **caractérisée en ce que** le ressort à cran d'arrêt (28) est muni d'une pente ou bien d'une voûte d'introduction (39) et/ou d'une voûte, d'une nervure, d'une arête encliquetable (38) ou semblables apte à être attachée à l'arrêt (32) d'une manière entraînée par adhérence.

11. Assemblage d'angle avec des pièces en tôle (12; 16) s'étendant en nappe ainsi qu'avec un bout d'angle (60) apte à être attaché par engagement positif aux arêtes libres (48) des pièces en tôle et qui constitue un corps avec une forme et des dimensions adaptées aux pièces en tôle (12, 16) à joindre, notamment conçu pour une porte en acier pour meubles selon l'une des revendications 4 à 10, **caractérisé en ce que** le bout d'angle (60) est suçceptible à être enclenché par simple appui manuel dans au moins une des pièces en tôle (12; 16) à joindre, que le bout d'angle (60) présente en proximité de ses zones extérieures au moins deux taquets d'enclenchement à ressort (64) qui attaquent au moment de l'encliquetage en dessous ou derrière les arêtes libres (48) appartenant au moins à une pièce en tôle (12) se trouvant dans la position d'enclenchement, et que les taquets (64) sont imperceptibles de l'extérieur sur le bout d'angle (60) encliqueté.

12. Assemblage d'angle selon la revendication 11, **caractérisé en ce que** deux taquets d'enclenchement à ressort (64) sont agencés diamétralement opposés l'un par rapport à l'autre dans respectivement une zone du bout d'angle (60) qui a essentiellement une forme de base carrée ou rectangulaire.

13. Assemblage d'angle selon l'une des revendications 11 ou 12, **caractérisé en ce que** des zones intérieures, qui se trouvent en voisinage des taquets d'enclenchement à ressort (64) appartenant au bout d'angle (60), sont munies des creux (65) qui servent comme espace évasif pour des mouvements latéraux des taquets d'enclenchement à ressort (64).

14. Assemblage d'angle selon l'une des revendications 11 à 13, **caractérisé en ce que** chaque taquet d'enclenchement à ressort (64) possède une surface de glissement (70), qui passe au moment de l'encliquetage du bout d'angle (60) avec peu de friction à côté d'une arête libre d'une pièce en tôle et que le taquet d'enclenchement à ressort (64) est muni d'une surface de fixation (72) qui interagit dans la position d'encliquetage d'une manière entraînée par adhérence, notamment entraînée par friction, avec cette arête de la pièce en tôle (48).

15. Assemblage d'angle selon la revendication 14, **caractérisé en ce que** la surface de glissement (70) forme un angle avec la surface de fixation (72) et/ou que la surface de glissement (70) s'étend d'une manière inclinée ou envoûtée par rapport à la direction de mouvement du taquet d'enclenchement à ressort (64).

16. Assemblage d'angle selon l'une des revendications 14 ou 15, **caractérisé en ce que** la surface de fixation (72) possède des moyens entrainés par friction et/ou des moyens à engagement positifs, comme p. ex. un cannelage, des rainures ou semblables, destinés à l'interaction avec l'arête libre de la pièce en tôle (48).

17. Assemblage d'angle selon l'une des revendications 14 à 16, **caractérisé en ce que** les surfaces de glissement (70), appartenant à deux taquets d'enclenchement à ressort (64), sont arrangées en angle l'un par rapport à l'autre, notamment sous forme rectangulaire.

18. Assemblage d'angle selon l'une des revendications 11 à 17, **caractérisé en ce que** le bout d'angle (60) est muni d'un profil creux (61) avec des encoches en nappe (66; 67) destinées à recevoir des bouts (56; 57) de manière affleurée qui appartiennent à au moins une pièce en tôle (12; 16).

19. Assemblage d'angle pour une porte en acier pour meubles selon l'une des revendications 11 à 18, **caractérisé en ce qu'**un cadre à pli (40) avec des arêtes (42) et une coque ou un panneau en tôle (16) avec des arêtes longitudinales (52) forment ensemble un vantail de porte (T), un panneau de lambris ou semblable, que l'espace à pli (40) présente des encoches d'angle (44), dans lesquelles respectivement un bout d'angle (60) est apte à être encliqueté et ce bout d'angle (60) est apte à recevoir un couvre-joint, qui pointe vers une direction essentiellement orientée perpendiculaire par rapport à la surface de l'extension principale de la coque en tôle (16) et qui repose en position d'encliquetage sur ou à côté d'un taquet d'enclenchement à ressort (64) du bout d'angle (60).

20. Assemblage d'angle selon la revendication 19, **caractérisé en ce que** le bout d'angle (60) est apte à être encliqueté suivant une direction (R), qui est orientée en transversale par rapport à la surface d'extension principale d'au moins une pièce en tôle (p.ex. 12).
